(19) Europäisches Patentamt
European Patent Office
Office européen des brevets

(11) EP 1 406 971 B1

(12) # FASCICULE DE BREVET EUROPEEN

(45) Date de publication et mention de la délivrance du brevet:
**09.08.2017 Bulletin 2017/32**

(21) Numéro de dépôt: **02758522.3**

(22) Date de dépôt: **27.06.2002**

(51) Int Cl.:
***C08L 71/02*** (2006.01) ***C08L 77/00*** (2006.01)
***C08L 77/02*** (2006.01) ***C08L 77/06*** (2006.01)
***C08G 81/00*** (2006.01) ***C08G 69/04*** (2006.01)
***C08G 69/40*** (2006.01) ***D01F 6/60*** (2006.01)
***D01F 6/82*** (2006.01) ***D01F 6/90*** (2006.01)

(86) Numéro de dépôt international:
**PCT/FR2002/002228**

(87) Numéro de publication internationale:
**WO 2003/002668 (09.01.2003 Gazette 2003/02)**

(54) **POLYMERE THERMOPLASTIQUE, SON APPLICATION DANS DES COMPOSITIONS POLYAMIDES A HYDROPHILIE ET ANTISTATICITE AMELIOREES**

THERMOPLASTISCHES POLYMER UND SEINE VERWENDUNG IN POLYAMID-ZUSAMMENSETZUNGEN MIT VERBESSERTEN ANTISTATISCHEN UND HYDROPHILEN EIGENSCHAFTEN

THERMOPLASTIC POLYMER, USE THEREOF IN POLYAMIDE COMPOSITIONS WITH IMPROVED HYDROPHILY AND ANTI-STATICITY

(84) Etats contractants désignés:
**AT BE CH CY DE DK ES FI FR GB GR IE IT LI LU MC NL PT SE TR**

(30) Priorité: **28.06.2001 FR 0108522**

(43) Date de publication de la demande:
**14.04.2004 Bulletin 2004/16**

(73) Titulaire: **Rhodianyl**
**92512 Boulogne-Billancourt Cédex (FR)**

(72) Inventeurs:
- **LAGRANGE, Jean-Paul**
**F-69005 Lyon (FR)**
- **PAULO, Christophe**
**F-69004 Lyon (FR)**
- **SASSI, Jean-François**
**42800 SAINT-ROMAN en JAREZ (FR)**
- **TOURAUD, Franck**
**27200 Vernon (FR)**
- **VIDIL, Christine**
**F-69360 Communay (FR)**

(74) Mandataire: **Chatelan, Florence Anne et al**
**Rhodia Opérations**
**85, avenue des Frères Perret - BP 62**
**69192 Saint-Fons Cedex (FR)**

(56) Documents cités:
**EP-A- 0 682 070** **EP-A- 0 761 715**
**US-A- 5 959 069**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 406 971 B1

Printed by Jouve, 75001 PARIS (FR)

## Description

La présente invention concerne un polymère thermoplastique comprenant au moins un bloc de polyoxyde d'alkylène et son application dans des compositions polyamides à hydrophilie et/ou antistaticité améliorées.

Dans les domaines de la formulation des matériaux synthétiques on cherche souvent à modifier les propriétés d'hydrophilie et/ou d'antistaticité, afin de conférer une meilleure travaillabilité dudit matériau, un meilleur confort d'utilisation du produit final, ou une adaptation au milieu extérieur.

Dans le domaine des fils textiles on cherche par exemple à améliorer l'hydrophilie du polyamide, afin de rapprocher ses propriétés de celles du coton et d'apporter un meilleur confort au porter.

Dans le domaine des fils, fibres et filaments, l'antistaticité peut être nécessaire pour des raisons de confort d'utilisation. Elle permet entre autres d'éviter l'accumulation de charges électriques. Un des effets est par exemple de limiter l'accumulation de poussières sur des surfaces flockées. De plus, l'utilisation d'une fibre intrinsèquement antistatique peut permettre d'éviter l'emploi, parmi les fibres utilisées pour réaliser la surface flockée, d'une fibre fortement conductrice présentant le plus souvent une forte coloration.

Pour améliorer l'hydrophilie ou l'antistaticité du polyamide ou de compositions à base de polyamide, il est connu d'utiliser des composés à motifs polyéther ou de modifier le polyamide par insertion dans la structure de motifs polyéther. De très nombreux documents décrivent différents modes d'introduction de ces motifs dans le polyamide, notamment par modification du polyamide, par exemple sous forme de mélanges de polymères ou de copolymères, ou en association avec le polyamide par exemple sous forme de fibres bi-composantes.

Le document "hydrophilic nylon for improved apparel comfort", Textile Research Journal, juin 1985, page 325-333, décrit la fabrication et les propriétés d'un copolymère obtenu par polycondensation de caprolactame et de polyoxydes d'éthylène à terminaisons amines. Il s'agit ici d'une modification de structure du polyamide. Le copolymère est filé en fondu pour la fabrication de fils. Les fils présentent une hydrophilie améliorée par rapport à un polyamide classique. Cette méthode nécessite toutefois la fabrication de copolymères spéciaux, et implique donc une adaptation des procédés de polymérisation.

D'autre part il est connu d'introduire des composés à motifs polyéther, dans les applications textiles notamment, sous forme par exemple d'ensimage ou d'apprêt appliqué sur fil, fibre, filament ou tissu. Les motifs polyéther étant partiellement solubles dans l'eau, l'effet du traitement disparaît après quelques lavages.

On peut préférer modifier les propriétés du polyamide par ajout d'un agent en phase fondue. Dans le cadre de la fabrication d'articles filés, l'agent peut par exemple être ajouté en fondu avant le filage.

A cette fin, il est connu d'introduire du polyéthylène glycol dans le polyamide. Ce composé, soluble dans l'eau, est toutefois fortement extrait des compositions au contact de l'eau. Son effet ne perdure pas après quelques lavages.

Il est également connu d'introduire des copolymères statistiques de polyester et de polyéthylène glycol dans le polyamide, mais ces copolymères sont partiellement dissous dans les eaux de lavages.

On connaît enfin des compostions obtenues par ajout au polyamide de copolymères statistiques obtenus à partir de caprolactame et de polyoxydes d'éthylène à terminaisons amines. Ces compositions présentent une perte de propriétés après lavage encore relativement importante.

Le document US4331786 décrit également un copolymère bloc linéaire polyéther esteramide de formule [CO-A-CO-O-B-O]n, selon laquelle A est un polyamide, B est un polyoxyalkylène. Ce matériau est utilisé comme additif antistatique.

Le document US4727133 décrit un polyéther esteramide bloc thermoplastique obtenu à partir d'un polyamide ayant des groupements terminaux carboxyliques, d'un dihydroxypolyether et d'un diol. Ce polyéther esteramide est utilisé comme polymère stable à l'hydrolyse.

La présente invention a pour objet de proposer un nouveau polymère thermoplastique comprenant au moins un bloc de polyoxyde d'alkylène, pouvant être introduit notamment comme additif dans du polyamide en phase fondue avant filage, et ne présentant pas les inconvénients mentionnés ci-dessus. Les compositions à base de polyamide correspondantes présentent notamment, au-delà des propriétés hydrophiles durables, une bonne tenue à la teinture et un maintien des propriétés mécaniques.

Dans ce but, l'invention a pour premier objet un polymère thermoplastique comprenant un bloc de polymère thermoplastique et au moins un bloc de polyoxyde d'alkylène, caractérisé en ce que :

a) le bloc de polymère thermoplastique comprend :

♦ une chaîne macromoléculaire étoile ou H comprenant au moins un coeur multifonctionnel et au moins une branche ou un segment de polymère thermoplastique relié au coeur, le coeur comprenant au moins trois fonctions réactives identiques
et/ou
♦ une chaîne macromoléculaire linéaire comprenant un coeur difonctionnel et au moins un segment de polymère

thermoplastique relié au coeur

b) le ou les blocs de polyoxyde d'alkylène sont reliés à au moins une partie des extrémités libres du bloc de polymère thermoplastique de la façon suivante :

♦ au moins une extrémité libre de la chaîne macromoléculaire étoile ou H, choisie parmi les extrémités de branche ou segment de polymère thermoplastique et les extrémités du coeur multifonctionnel, est reliée à un bloc de polyoxyde d'alkylène
et/ou
♦ au moins une extrémité libre de la chaîne macromoléculaire linéaire, choisie parmi les extrémités de segment de polymère thermoplastique et les extrémités du coeur difonctionnel, est reliée à un bloc de polyoxyde d'alkylène ; les deux extrémités libres de la chaîne macromoléculaire linéaire étant reliées à des blocs de polyoxyde d'alkylène lorsque le bloc de polymère thermoplastique comprend des chaînes macromoléculaires uniquement de type linéaire ; et lorsque le bloc de polymère thermoplastique comprend des chaînes macromoléculaires uniquement de type linéaire, alors le polymère thermoplastique dont les deux extrémités libres de la chaîne macromoléculaire linéaire sont reliées à des blocs de polyoxyde d'alkylène est obtenu lorsque l'on fait réagir :

- d'une part des blocs de polyoxyde d'alkylène possédant une seule fonction terminale réactive B,
- d'autre part :
- des chaînes macromoléculaires de polymère thermoplastique possédant au moins des fonctions terminales réactives A,
  et/ou
- des composés d'au moins deux types :

  ⇒ des composés difonctionnels comprenant des fonctions réactives A,
  ⇒ des monomères comprenant chacun des fonctions réactives A et B et/ou un polymère thermoplastique comprenant des fonctions réactives A et B,

les fonctions A et B pouvant réagir entre elles pour fixer les blocs de polyoxyde d'alkylène sur les chaînes macromoléculaires de polymère thermoplastique et/ou les monomères et/ou le polymère thermoplastique; en chauffant à une température suffisante pour réaliser la réaction entre ces différentes fonctions.

L'invention a pour second objet un procédé de préparation du polymère ci-dessus, caractérisé en ce que l'on fait réagir :

♦ d'une part des blocs de polyoxyde d'alkylène possédant des fonctions terminales réactives B,
♦ d'autre part :

- des chaînes macromoléculaires de polymère thermoplastique possédant au moins des fonctions terminales réactives A
  et/ou
- des monomères d'au moins deux types :

  ⇒ des composés multifonctionnels comprenant des fonctions réactives A
  ⇒ des monomères comprenant chacun des fonctions réactives A et B les fonctions A et B pouvant réagir entre elles pour fixer les blocs de polyoxyde d'alkylène sur les chaînes macromoléculaires de polymère thermoplastique et/ou les monomères;

et on chauffe à une température suffisante pour réaliser la réaction entre ces différentes fonctions.

L'invention concerne également, et c'est le troisième objet de l'invention, des compositions polymères thermoplastiques comprenant au moins :

♦ un polymère thermoplastique hydrophile comme décrit ci-dessus
♦ un second polymère thermoplastique, tel que du PA6 ou du PA 66 par exemple

Par coeur multifonctionnel on entend un coeur comprenant au moins trois fonctions réactives.

Le bloc de polymère thermoplastique, selon une première variante du premier objet de l'invention, peut comprendre des chaînes macromoléculaires étoiles ou H. Des polymères ou compositions polymères comprenant de telles chaînes macromoléculaires étoiles ou H sont par exemple décrits dans les brevets FR 2.743.077, FR 2.779.730, US 5.959.069, EP 0.632.703, EP 0.682.057 et EP 0.832.149.

Les chaînes macromoléculaires étoiles ou H préférées de l'invention sont des chaînes à structure polyamide. Elles sont obtenues par utilisation d'un composé multifonctionnel présentant au moins trois fonctions réactives, toutes les fonctions réactives étant identiques. Ce composé peut être utilisé comme comonomère en présence d'autres monomères dans un procédé de polymérisation. Il peut également être mélangé à un polymère en fondu au cours d'une opération d'extrusion.

Les chaînes macromoléculaires étoiles ou H comportent un coeur et au moins une branche de polymère thermoplastique, de préférence à structure polyamide. Généralement les chaînes macromoléculaires étoiles ou H comportent un coeur et au moins trois branchess de polymère thermoplastique, de préférence du polyamide. Les branches sont liées au coeur par une liaison covalente, par l'intermédiaire d'un groupement amide ou d'un groupement d'une autre nature, comme un groupement ester par exemple. Le coeur est un composé chimique organique ou organométallique, de préférence un composé hydrocarboné comportant éventuellement des hétéroatomes et auquel sont reliées les branches. Les branches sont de préférence des chaînes polyamides. Elles peuvent présenter des branchements entre chaînes linéaires; c'est notamment le cas pour les structures H. Les chaînes constituant les branches sont de préférence des chaînes de polyamide du type de celles obtenues par polymérisation des lactames ou aminoacides, par exemple de type polyamide 6.

Selon un mode de réalisation particulier du premier objet de l'invention, la chaîne macromoléculaire étoile du bloc thermoplastique est un polyamide étoile obtenu par copolymérisation à partir d'un mélange de monomères comprenant :

a) un composé multifonctionnel comprenant au moins trois fonctions réactives identiques choisies parmi la fonction amine et la fonction acide carboxylique

b) des monomères de formules générales (IIa) et/ou (IIb) suivantes :

$$X—R_1—Y \qquad (IIa)$$

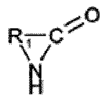 (IIb)

c) le cas échéant des monomères de formule générale (III) suivante :

$$Z\text{-}R_2\text{-}Z \qquad (III)$$

dans lesquelles :

- Z représente une fonction identique à celle des fonctions réactives du composé multifonctionnel
- $R_1$, $R_2$ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire,

Par acide carboxylique, on entend les acides carboxyliques et leurs dérivés, tels que les anhydrides d'acide, les chlorures d'acide, les esters etc. Par amine, on entend les amines et leurs dérivés.

Des procédés d'obtention de ces polyamides étoiles sont décrits dans les brevets FR 2.743.077 et FR 2.779.730. Ces procédés conduisent à la formation de chaînes macromoléculaires étoiles, en mélange avec éventuellement des chaînes macromoléculaires linéaires.

Dans le cas où on utilise un comonomère c), la réaction de polymérisation (polycondensation) est avantageusement effectuée jusqu'à l'atteinte de l'équilibre thermodynamique.

Selon un mode de réalisation particulier du premier objet de l'invention, la chaîne macromoléculaire H du bloc de polymère thermoplastique est un polyamide H obtenu par copolymérisation à partir d'un mélange de monomères comprenant :

a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique

les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

De tels polyamides H et leur procédé d'obtention sont décrits dans le brevet US 5959069.

Selon un autre mode de réalisation particulier du premier objet de l'invention, le bloc de polymère thermoplastique est obtenu par mélange en fondu, par exemple à l'aide d'un dispositif d'extrusion, d'un polyamide du type de ceux obtenus par polymérisation des lactames et/ou des aminoacides, et d'un composé multifonctionnel comprenant au moins trois fonctions réactives identiques choisies parmi la fonction amine ou acide carboxylique. Le polyamide est par exemple du polyamide 6.

De tels procédés d'obtention sont décrits dans les brevets EP 0.682.070 et EP 0.672.703.

Les composés multifonctionnels, monomères à l'origine des chaînes macomoléculaires étoile ou H du premier objet de l'invention, peuvent être choisis parmi les composés présentant une structure arborescente ou dendritique. Ils peuvent également être choisis parmi les composés représentés par la formule (IV) :

$X\text{-}R_1\text{-}Y$ (IIa)

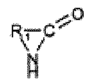 (IIb)

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

Selon une caractéristique particulière de l'invention, le radical $R_1$ est soit un radical cycloaliphatique tel que le radical tétravalent de cyclohexanonyle, soit un radical 1,1,1-triyle-propane, 1,2,3-triyle-propane.

Comme autres radicaux $R_1$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une fonction amide.

A titre d'exemple de composés polyfonctionnels, on peut citer la 2,2,6,6-tétra-(β-carboxyéthyl)cyclohexanone, le diaminopropane - N,N,N',N' acide tétraacétique de formule suivante :

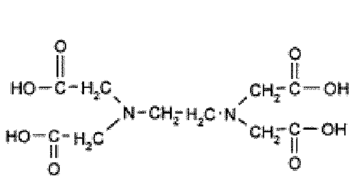

ou les composés provenant de la réaction du triméthylol propane ou du glycérol avec l'oxyde de propylène et amination des groupes hydroxyles terminaux. Ces derniers composés sont commercialisés sous le nom commercial JEFFAMINES T® par la société HUNTSMAN, et ont comme formule générale :

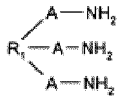

Dans laquelle :

- $R_1$ représente un radical 1,1,1-triyle propane, ou 1,2,3-triyle propane,
- A représente un radical polyoxyéthylénique.

Des exemples de composés multifonctionnels pouvant convenir sont notamment cités dans le brevet US 5346984, dans le brevet US 5959069, dans la demande de brevet WO 9635739, dans le brevet EP 672703. On cite plus particulièrement les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyle-1,8,octanediamine. On cite aussi les dendrimères de formule :

$$(R_2N\text{-}(CH_2)_n)_2\text{-}N\text{-}(CH_2)_x\text{-}N\text{-}((CH_2)_n\text{-}NR_2)_2$$

dans laquelle

R est un atome d'hydrogène ou un groupement $-(CH_2)_n-NR^1_2$ où
$R^1$ est un atome d'hydrogène ou un groupement $-(CH_2)_n-NR^2_2$ où
$R^2$ est un atome d'hydrogène ou un groupement $-(CH_2)_n-NR^3_2$ où
$R^3$ est un atome d'hydrogène ou un groupement $-(CH_2)_n-NH_2$ ,
n étant un entier compris entre 2 et 6
x étant un entier compris entre 2 et 14.
n est de préférence un entier égal à 3 ou 4, en particulier 3, et x est de préférence un entier compris entre 2 et 6 bornes incluses, de préférence compris entre 2 et 4 bornes incluses, en particulier égal à 2. Chaque radical R peut être choisi indépendamment des autres. Le radical R est de préférence un atome d'hydrogène ou un groupement $-(CH_2)_n-NH_2$.

On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyle, naphtyle, anthracényle, biphényle et triphényle, ou les hétérocycles comme les pyridine, bipyridine, pyrrole, indole, furane, thiophène, purine, quinoléine, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphthalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement l'acide 2,4,6-triaminocaproïque-1,3,5-triazine (TACT).

Selon un mode préférentiel de réalisation du premier objet de l'invention, les composés multifonctionnels sont choisis parmi la 2,2,6,6-tétra-((β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles ou H de l'invention peut comporter d'autres composés, tels que des limitateurs de chaînes, des catalyseurs, des additifs, tels que des stabilisants lumière, des stabilisants thermiques, des matifiants.

Le bloc de polymère thermoplastique, selon une deuxième variante du premier objet de l'invention, comprend une chaîne macromoléculaire linéaire comprenant un coeur difonctionnel et au moins un segment de polymère thermoplastique relié au coeur.

Ces chaînes macromoléculaires linéaires sont obtenues par utilisation d'un composé difonctionnel présentant deux fonctions réactives identiques. Ce composé peut être utilisé comme comonomère en présence d'autres monomères

dans un procédé de polymérisation. Il peut également être mélangé à un polymère en fondu au cours d'une opération d'extrusion.

Les chaînes macromoléculaires linéaires comportent un coeur difonctionnel et au moins un segment de polymère thermoplastique, de préférence du polyamide. Généralement les chaînes macromoléculaires linéaires comportent un coeur difonctionnel et deux segments de polymère thermoplastique, de préférence du polyamide. Les segments sont liés au coeur par une liaison covalente, par l'intermédiaire d'un groupement amide ou d'un groupement d'une autre nature. Le coeur difonctionnel est un composé chimique organique ou organométallique, de préférence un composé hydrocarboné comportant éventuellement des hétéroatomes et auquel sont reliés les segments. Les segments sont de préférence des chaînes polyamides. Les chaînes constituant les segments sont de préférence des chaînes de polyamide du type de celles obtenues par polymérisation des lactames ou aminoacides, par exemple de type polyamide 6.

Selon un mode de réalisation particulier du premier objet de l'invention, la chaîne macromoléculaire linéaire du bloc thermoplastique est un polyamide linéaire obtenu par copolymérisation à partir d'un mélange de monomères comprenant :

a) un composé difonctionnel comprenant deux fonctions réactives identiques choisies parmi la fonction amine et la fonction acide carboxylique

b) des monomères de formules générales (Va) et/ou (Vb) suivantes:

X-R-Y (Va)

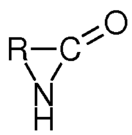

(Vb)

dans lesquelles :

- ♦ R représente un radical hydrocarboné aliphatique, cycloaliphatique ou aromatique, substitué ou non, comprenant de 2 à 36 atomes de carbone, et pouvant comprendre des hétéroatomes
- ♦ Y est une fonction amine primaire quand X est une fonction acide carboxylique
- ♦ Y est une fonction acide carboxylique quand X est une fonction amine primaire.

Les monomères de formule (Va) ou (Vb) correspondent à des polyamides du type de ceux obtenus par polymérisation à partir de lactames et/ou d'aminoacides. Les procédés de polymérisation de tels composés sont connus : on cite entre autres la polymérisation anionique, la polycondensation en fondu.

Le composé difonctionnel, monomère à l'origine de la chaîne macromoléculaire linéaire du premier objet de l'invention, peut être choisi parmi les composés représentés par la formule (VI) :

$Z\text{-}A\text{-}R_1\text{-}B\text{-}Z$ (VI)

dans laquelle :

- ♦ $R_1$ est un radical hydrocarboné comprenant au moins deux atomes de carbone linéaire ou cyclique, aromatique ou aliphatique, substitué ou non et pouvant comprendre des hétéroatomes,
- ♦ A et B sont des liaisons covalentes ou des radicaux hydrocarbonés aliphatiques comprenant de 1 à 6 atomes de carbone, A et B étant identiques ou différents
- ♦ Z est une fonction choisie parmi la fonction amine et la fonction acide carboxylique.

Les radicaux $R_1$ et A sont de préférence des radicaux méthyléniques ou polyméthyléniques tel que les radicaux éthyle, propyle ou butyle, ou un radical polyoxyalkylènique tel que le radical polyoxyéthylènique.

On peut citer par exemple comme composé difonctionnel convenable pour l'invention l'acide adipique.

Le composé difonctionnel peut être introduit par exemple dans le milieu de polymérisation de la chaîne macromoléculaire linéaire de l'invention, c'est-à-dire dans le mélange de monomères à l'origine de la chaîne macromoléculaire. Il peut également être introduit en fondu, dans un milieu comprenant la chaîne macromoléculaire linéaire. On peut utiliser dans ce dernier cas un dispositif d'extrusion permettant le mélange en fondu du composé et de la chaîne macromoléculaire linéaire.

Le radical R des formules (Va) et (Vb) est avantageusement choisi parmi les radicaux suivants :

- le radical pentyle divalent non ramifié, la chaîne macromoléculaire linéaire du bloc de polymère thermoplastique est alors un polyamide 6,
- le radical décyle (10 atomes de carbone) divalent non ramifié, la chaîne macromoléculaire linéaire du bloc de polymère thermoplastique est alors un polyamide 11,
- le radical undécyle (11 atomes de carbone) divalent non ramifié, la chaîne macromoléculaire linéaire du bloc de polymère thermoplastique est alors un polyamide 12.

Selon un mode préférentiel de réalisation du premier objet de l'invention, le radical R des formules (Va) et (Vb) est le radical pentyle divalent non ramifié, la chaîne macromoléculaire linéraire du bloc de polymère thermoplastique est alors un polyamide 6.

Le mélange de monomères à l'origine des chaînes macromoléculaires linéaires de l'invention peut comporter d'autres composés, tels que des limitateurs de chaînes, descatalyseurs, des additifs, tels que des stabilisants lumière, des stabilisants thermiques, des matifiants.

Selon un mode particulier de réalisation de la deuxième variante du premier objet de l'invention, la masse moléculaire moyenne de la chaîne macromoléculaire linéaire est comprise entre 200 et 50000 g/mol, de préférence entre 500 et 3000 g/mol.

Selon une variante du premier objet de l'invention, le bloc de polymère thermoplastique peut comprendre à la fois des chaînes macromoléculaires étoiles ou H et des chaînes macromoléculaires linéaires en mélange.

Selon un autre mode de réalisation particulier du premier objet de l'invention, le polymère modifié comprend, outre des chaînes macromoléculaires étoiles ou H comprenant un coeur multifonctionnel et/ou des chaînes macromoléculaires linéaires comprenant un coeur difonctionnel, des chaînes macromoléculaires linéaires ne contenant pas de coeur multifonctionnel et/ou difonctionnel. Ces chaînes macromoléculaires linéaires ne contenant pas de coeur multifonctionnel et/ou difonctionnel sont notamment des polyamides linéaires.

Le bloc de polyoxyde d'alkylène POA du premier objet de l'invention est de préférence linéaire. Il peut être choisi parmi les blocs polyoxyde d'éthylène, polytriméthylène oxide, polytetraméthylène oxyde. Dans le cas où le bloc est à base de polyoxyde d'éthylène, il peut comporter aux extrémités du bloc des motifs propylène glycol. Le bloc de polyoxyde d'alkylène est de préférence un bloc de polyoxyde d'éthylène.

Les masses moléculaires moyennes des blocs de polymère thermoplastique et de polyoxyde d'alkylène de l'invention peuvent être très différentes. On préfère toutefois qu'elle soient proches l'une de l'autre.

La masse moléculaire moyenne des blocs POA est de préférence comprise entre 200 et 2000 g/mol.

Au moins une partie des extrémités libres des chaînes macromoléculaires du premier objet de l'invention est reliée à des blocs de polyoxyde d'alkylène. Les extrémités libres des chaînes macromoléculaires désignent à la fois :

⇒ les extrémités des branches ou segments de polymère thermoplastique reliés au coeur

⇒ les extrémités du coeur non reliées à des branches ou segments de polymère thermoplastique, autrement dit les fonctions réactives libres du coeur.

Lorsque le bloc de polymère thermoplastique de l'invention comprend des chaînes macromoléculaires uniquement de type linéaire, les deux extrémités libres des chaînes macromoléculaires linéaires sont reliées à des blocs de polyoxyde d'alkylène.

Les blocs de polyoxyde d'alkylène de l'invention sont liés aux branches ou segments de polymère thermoplastique et/ou au coeur du bloc de polymère thermoplastique par une liaison covalente, par l'intermédiaire d'un groupement amide ou d'un groupement d'une autre nature.

Selon un mode de réalisation préférentiel du premier objet de l'invention, toutes les extrémités libres des chaînes macromoléculaires du bloc de polymère themoplastique sont reliées à un bloc de polyoxyde d'alkylène.

La présente invention concerne également un procédé de préparation du polymère décrit ci-dessus, c'est le second objet de l'invention.

Il consiste à faire réagir :

- ♦ d'une part des blocs de polyoxyde d'alkylène possédant des fonctions terminales réactives B,
- ♦ d'autre part :

  - des chaînes macromoléculaires de polymère thermoplastique possédant au moins des fonctions terminales réactives A
    et/ou

- des composés d'au moins deux types :

  ⇒ des composés multifonctionnels et/ou difonctionnels comprenant des fonctions réactives A
  ⇒ des monomères comprenant chacun des fonctions réactives A et B et/ou

un polymère thermoplastique comprenant des fonctions réactives A et B les fonctions A et B p ouvant réagir entre elles pour fixer les blocs de polyoxyde d'alkylène sur les chaînes macromoléculaires de polymère thermoplastique et/ou les monomères et/ou le polymère thermoplastique;
et on chauffe à une température suffisante pour réaliser la réaction entre ces différentes fonctions.

Tout ce qui a été décrit ci-dessus concernant les blocs de polyoxyde d'alkylène est valable ici à l'identique pour le second objet de l'invention.
Selon une première variante du second objet de l'invention, les chaînes macromoléculaires de polymère thermoplastique sont des chaînes étoile ou H, et/ou des chaînes linéaires. Tout ce qui a été décrit ci-dessus à propos des chaînes macromoléculaires étoiles ou H, ou à propos des chaînes linéaires, est valable ici à l'identique, pour le second objet de l'invention.
Selon une deuxième variante du second objet de l'invention, on fait réagir les blocs de polyoxyde d'alkylène avec les monomères à l'origine des chaînes macromoléculaires de polymère thermoplastique du bloc de polymère thermoplastique de l'invention. Les monomères concernés sont le composé multifonctionnel et/ou difonctionnel comprenant des fonctions réactives A et des monomères comprenant chacun des fonctions réactives A et B. Les monomères à l'origine des chaînes macromoléculaires de polymère thermoplastique sont par exemple introduits dans un milieu de polymérisation contenant les blocs de polyoxyde d'alkylène. Le composé multifonctionnel et/ou difonctionnel peut être introduit simultanément ou non aux autres monomères, comprenant des fonctions réactives A et B. De préférence le composé multifonctionnel et/ou difonctionnel est introduit après les autres monomères comprenant des fonctions réactives A et B.
Selon une troisième variante du second objet de l'invention, on fait réagir les blocs de polyoxyde d'alkylène avec des composés à l'origine des chaînes macromoléculaires de polymère thermoplastique du bloc de polymère thermoplastique de l'invention. Ces composés sont le composé multifonctionnel et/ou difonctionnel comprenant des fonctions réactives A et un polymère thermoplastique comprenant des fonctions réactives A et B. Ces composés peuvent être par exemple mélangés aux blocs de polyoxyde d'alkylène au cours d'une opération d'extrusion.
Chaque bloc de polyoxyde d'alkylène peut comprendre une ou plusieurs fonctions terminales réactives B. De préférence chaque bloc de polyoxyde d'alkylène contient une fonction terminale réactive B. Comme exemple de bloc de polyoxyde d'alkylène, on peut citer des blocs possédant une fonction réactive amine, comme la Jeffamine M 1000 ® ou la Jeffamine M 2070 ®.
Les fonctions terminales A et B sont de préférence des fonctions acides carboxyliques ou amines.
Selon une caractéristique particulière du second objet de l'invention, les fonctions terminales A sont des fonctions acides carboxyliques lorsque les fonctions terminales B sont des fonctions amines, et vice-versa.
Le polymère thermoplastique de l'invention peut être utilisé seul ou comme élément d'une composition. Ce polymère thermoplastique peut être particulièrement utilisé comme additif dans des compositions polymériques comprenant une matrice polymérique. Il intervient notamment dans la composition polymérique comme composé modificateur des propriétés d'hydrophilie et/ou de l'antistaticité de la composition polymérique. Les matrices polymériques avantageuses des compositions de l'invention sont les polymères thermoplastiques, notamment les polyamides. Il est connu de l'homme du métier que les polymères tels que les polyamides, les polyesters, les polyoléfines, le PVC notamment, font partie du groupe des polymères thermoplastiques.
Le troisième objet de l'invention concerne donc des compositions polymère thermoplastique comprenant au moins :

♦ un premier polymère hydrophile thermoplastique comme décrit ci-dessus ou obtenu selon le procédé décrit précédemment
♦ un second polymère thermoplastique, tel que du PA6 ou du PA66 par exemple

Le second polymère thermoplastique de la composition est de préférence un polyamide. Le polyamide peut être choisi parmi le polyamide 6, le polyamide 66, le polyamide 4-6, le polyamide 6-10, le polyamide 11, le polyamide 12, les mélanges et copolymères à base de ces polymères.
Les compositions selon l'invention sont de préférence obtenues par mélange en phase fondue du second polymère thermoplastique et du composé modificateur d'hydrophilie et/ou de l'antistaticité. Le mélange peut par exemple être réalisé à l'aide d'un dispositif d'extrusion, par exemple un mélangeur à simple vis ou double vis.
La proportion pondérale de composé modificateur dans la composition est de préférence comprise entre 4 et

20 %.

Les compositions de l'invention présentent une morphologie selon laquelle des inclusions du composé modificateur sont dispersées dans une phase continue du second polymère.

Les compositions, outre le composé modificateur, peuvent comporter d'autres charges tels que des agents matifiants, des pigments colorés, des agents de stabilisation chaleur ou lumière, des agents de protection chaleur, des agents anti-microbiens, des agents antisalissure, des agents antistatiques ou analogue. Cette liste n'a aucun caractère exhaustif.

Les compositions peuvent en particulier contenir un matifiant constitué de particules de dioxyde de titane, éventuellement enrobées afin de protéger le polymère de dégradations à leur contact. Le dioxyde de titane peut être utilisé seul ou en association avec d'autres agents matifiants. La proportion pondérale de matifiant dans les compositions peut atteindre quelques pour cents. Elle est par exemple comprise entre 0,2 et 0,5% pour un effet dit « mi-mat » , entre 0,5 et 1% pour un effet dit « mat » et entre 1 et 3 % pour un effet dit « grand-mat ». Pour obtenir une matité considérée comme importante, la concentration pondérale est généralement supérieure à 0,7%.

On peut aussi utiliser des particules de sulfure de zinc à titre de matifiant, ou bien un mélange dioxyde de titane / sulfure de zinc.

L'invention concerne également les fils, fibres et filaments obtenus par filage d'une composition précédemment décrite. Ces fils, fibres ou filaments sont réalisés selon les techniques usuelles de filage à partir d'un matériau comportant le second polymère thermoplastique, et le composé modificateur de l'hydrophilie et/ou antistaticité. Le filage peut être réalisé immédiatement après la polymérisation du polymère, celui-ci étant sous forme fondue, par extrusion à travers des filières. Il peut être réalisé à partir d'un composite granulé comportant le composé modificateur et le polymère. Le composé modificateur peut être incorporé au polymère fondu avant l'opération de filage, sous forme de mélange concentré dans un polymère. Tous les modes d'incorporation de composés dans un polymère à filer peuvent être utilisés.

Les procédés de filage sont connus. Brièvement ils consistent à extruder le matériau fondu à travers une filière et à refroidir les filaments obtenus. Les filaments sont généralement convergés sous la filière et rassemblés afin de subir des traitements tels que des étirages, texturation, ensimage, relaxation, teinture, frisure, fixations thermiques. Les traitements peuvent être effectués sur un nombre relativement restreint de filaments, pour la fabrication de fils par exemple, ou sur un nombre important de filaments, réunis sous forme de câble, de nappe ou de mèche, pour la fabrication de fibres par exemple, ou de câble flock.

Ces opérations complémentaires peuvent être réalisées de façon continue et être intégrées après le dispositif de filage ou être réalisées de façon discontinue. La liste des opérations ultérieures au filage n'a aucun effet limitatif.

Les fils, fibres ou filaments selon l'invention, peuvent être utilisés pour la fabrication de surfaces textiles. Les compositions selon l'invention peuvent être utilisées pour la réalisation de surfaces flockées. Les fibres flockées sont dans ce cadre constituées soit exclusivement de fibres de composition selon l'invention, soit partiellement, en association à d'autres fibres.

Les fils, fibres et filaments obtenus à partir de la composition présentent une hydrophilie et/ou une antistaticité accrue par rapport à celle du polymère non modifié, notamment du polyamide, avec une bonne conservation de ces propriétés après teinture et/ou lavage.

Les fils, fibres ou filaments selon l'invention sont en particulier adaptés pour la fabrication d'articles textiles. Ils peuvent être utilisés également pour la fabrication de moquettes, tapis.

L'invention concerne également des articles mis en forme à partir de compositions telles que décrites ci-dessus.

La composition de l'invention, lorsqu'elle est préparée à l'aide d'un dispositif d'extrusion, peut être conditionnée sous forme de granulés. Elle, ou généralement plus précisément les granulés, est destinée à être mise en forme à l'aide de procédés impliquant une fusion pour l'obtention d'articles, comme par exemple le moulage, l'injection, l'extrusion-soufflage. Les articles sont ainsi constitués de la composition.

L'utilisation des compositions selon l'invention peut être intéressante notamment dans le cadre de la fabrication d'articles pour l'industrie automobile, en particulier pour lafabrication de pièces de carrosserie. Les propriétés d'antistaticité et/ou d'hydrophilie du composé modificateur de la composition peut être intéressante pour ces articles.

D'autres détails ou avantages de l'invention apparaîtront plus clairement au vu des exemples donnés ci-dessous uniquement à titre indicatif.

**EXEMPLES**

**Exemple 1 : préparation d'un polyamide étoile hydrophile**

Dans un autoclave de 11 équipé d'un agitateur mécanique sont introduits :

- 336 g d'ε-caprolactame
- 12,31 g d'acide 1,3,5-benzène tricarboxylique

- 0,7 g d'ULTRANOX® 236
- 300 μl d'une solution aqueuse à 50% en poids d'acide hypophosphoreux.

Le mélange réactionnel est porté à 220°C sous azote et sous pression atmosphérique et maintenu à cette tempérautre pendant 30 minutes.

On ajoute alors progressivement pendant 20 minutes 352 g de Jeffamine ® M 2070.

Le milieu réactionnel est porté à 260°C puis maintenu à cette température pendant 1h. Puis le système est progressivement mis sous vide pendant 1h jusqu'à une pression de 5mbars.

Le système est ensuite coulé sur un plateau.

**Exemple 2 : préparation d'un polyamide linéaire tribloc hydrophile**

Dans un autoclave de 11 équipé d'un agitateur mécanique sont introduits :

- 350 g d'ε-caprolactame
- 12,92 g d'acide adipique
- 0,7 g d'ULTRANOX® 236
- 300 μl d'une solution aqueuse à 50% en poids d'acide hypophosphoreux.

Le mélange réactionnel est porté à 220°C sous azote et sous pression atmosphérique et maintenu à cette température pendant 30 minutes.

On ajoute alors progressivement pendant 40 minutes 354 g de Jeffamine ® M 2070.

Le milieu réactionnel est porté à 260°C puis maintenu à cette température pendant 80min. Puis le système est progressivement mis sous vide pendant 1h jusqu'à une pression de 5 mbars.

Le système est ensuite coulé sur un plateau.

**Exemple 3 : préparation d'un polyamide étoile hydrophile**

Dans un réacteur de 200 ml équipé d'une agitation mécanique sont introduits :

- 59,4 g d'ε-caprolactame
- 87,6 g de Jeffamine ® M 2070.

Le mélange réactionnel est porté à 260°C sous azote et sous pression atmosphérique et maintenu à cette température pendant 4h.

On ajoute 3,1 g d'acide 1,3,5-benzène tricarboxylique. Le mélange est maintenu deux heures à 260°C sous azote. Le réacteur est progressivement mis sous vide pendant 30 min jusqu'à une pression de 38 mbars.

**Exemple 4 - 6 : préparation de compositions de PA hydrophile**

Matières utilisées :

Polyamide A1: Polyamide 66 comprenant 0,3% en poids de dioxyde de titane, de viscosité relative de 41 (mesurée à 8,4% de polymère dans l'acide formique à 90%).
Additif B1 : polyamide étoile hydrophile de l'exemple 1
Additif C : polyamide linéaire tribloc hydrophile de l'exemple 2
Additif D : JEFFAMINE ® M2070 comercialisé par la société HUNTSMAN. Polymère statistique composé d'un ratio 10/32 d'oxyde de propylène et d'oxyde d'éthylène ; dont la masse moléculaire moyenne est de 2000 g/mol.

On prépare des granulés comportant le polyamide et un des additifs par extrusion en extrudeuse double vis avec alimentation en granulés de chacun des constituants. Les compositions ainsi réalisées sont données dans le tableau 1.

Tableau 1

| | Exemple 4 | Exemple 5 | Exemple 6 comparatif |
|---|---|---|---|
| Polyamide A1 (% en poids) | 90% | 90% | 90% |

(suite)

| | Exemple 4 | Exemple 5 | Exemple 6 comparatif |
|---|---|---|---|
| Additif (% en poids) | B1-10 % | C-10 % | D-10 % |

On file en fondu des fils à partir des granulés préparés à une température de 285°C. Le fil est bobiné à une vitesse de 4200 m/min et à un titre de 45 dtex pour 10 filaments. Les filaments issus de plusieurs bobines sont tissés de manière à former des chaussettes de 5 cm de diamètre.

La reprise d'humidité des compositions est mesurée par variation de poids après un temps de séjour de 48 heures en enceinte conditionnée à une humidité relative de 94% à 30°C ou de 54% à 30°C, puis un passage de 16h en étuve régulée à 80°C sous une pression de 7 mm de mercure. La reprise d'humidité est calculée comme suit :

$$\text{Reprise d'humidité} = (\text{masse humide} - \text{masse sèche})/\text{masse sèche},$$

les résultats sont présentés dans le tableau 2.

Tableau 2

| Exemples | 4 | 5 | 6 (comparatif) |
|---|---|---|---|
| Absorption d'humidité à 94% | 9,0% | 8.1% | 7.8% |
| Absorption d'humidité à 54% | 2,0% | 1,9% | 2,0% |

L'adhérence des additifs à la matrice est déterminée par variation de poids avant et après lavage. L'opération de lavage simule les traitements que peut avoir subi le produit : teinture, lavage.

4g de composition sont broyés à température cryogénique avec un broyeur RETSCH ® Ultra-centrifuge ZM 1000 équipé d'une grille de 1 mm. Les poudres sont ensuite séchées à 80°C pendant 48 heures et pesées. Une solution à 10% dans l'eau déminéralisée (4 g de poudre pour 36 g d'eau) est préparée. La solution est ensuite maintenue sous agitation magnétique à 500 t/min pendant 30 minutes à température ambiante. La solution est ensuite filtrée sur filtre n°11 (Prolabo ®), le filtrat et le gâteau sont séchés à 80°C pendant 48 heures et pesés. La perte de poids (relargage) est ensuite calculée :

$$\text{Perte de poids} = (\text{masse avant lavage} - \text{masse après lavage})/\ \text{masse avant lavage}.$$

Les résultats sont présentés dans le tableau 3.

Tableau 3

| Exemples | 4 | 5 | 6 comparatif |
|---|---|---|---|
| Relargage (% en poids) | 5,0% | 15,0% | 20,0% |

**Exemples 7 - 17 : préparation de compositions de PA hydrophile**

Matières utilisées :

- Polyamide A2: Polyamide 66 ne comprenant pas de dioxyde de titane, de viscosité relative de 41 (mesurée à 8,4% de polymère dans l'acide formique à 90%).
- Polyamide A3 : Polyamide 66 comprenant 1.6% en poids de dioxyde de titane, de viscosité relative de 41 (mesurée à 8,4% de polymère dans l'acide formique à 90%).
- Polyamide A4 : Polyamide 6 comprenant moins de 0.03% en poids de dioxyde de titane, de viscosité relative de 2.06 (mesurée à 1% de polymère dans l'acide sulfurique à 90%).
- Additif B2 : polyamide étoile hydrophile de l'exemple 3

On prépare des fils comportant le polyamide et un des additifs par mélange en extrudeuse monovis de filage avec alimentation en granulés de chacun des constituants, filage en fondu à une température de 285°C ou de 260°C

respectivement pour le polyamide 66 et le polyamide 6. Le fil est bobiné à une vitesse de 4200 m/min et à des titres différents.

Les compositions ainsi réalisées sont données dans le tableau 4.

Tableau 4

| Exemples | Polyamide (% en poids) | Additif (% en poids) | Titre du fil | |
|---|---|---|---|---|
| | | | Nombre de dtex | Nombre de filaments |
| 7 | A2-93% | B2-7% | 78 | 23 |
| 8 | A2-93% | B2-7% | 78 | 68 |
| 9 | A2-94.5% | B2-5.5% | 44 | 34 |
| 10 | A1-93% | B2-7% | 78 | 23 |
| 11 | A3-93% | B2-7% | 78 | 68 |
| 12 | A3-94.5% | B2-5.5% | 44 | 34 |
| 13 | A4-94.5% | B2-5.5% | 44 | 12 |
| 14 | A4-96% | B2-4% | 44 | 12 |
| 15 | A4-94% | B2-6% | 44 | 12 |
| 16 | A4-96% | B2-4% | 55 | 12 |
| 17 | A4-94% | B2-6% | 55 | 12 |

La reprise d'humidité des compositions est mesurée de la même manière que dans les exemples 4 à 6, à une humidité relative de 94% à 30°C, sur des poudres préparées comme suit :

4g de composition sont broyés à température cryogénique avec un broyeur RETSCH ® Ultra-centrifuge ZM 1000 équipé d'une grille de 1 mm. Les poudres sont ensuite séchées à 80°C pendant 48 heures et pesées.

Les résultats sont présentés dans le tableau 5

Tableau 5

| Exemples | 7 | 8 | 9 | 10 | 11 | 12 | 13 | 14 | 15 | 16 | 17 |
|---|---|---|---|---|---|---|---|---|---|---|---|
| Absorption d'humidité à 94% (%) | 9-9.2 | 9-9.2 | 8-8.5 | 9-9.2 | 9-9.2 | 8-8.5 | 9 | 8.5 | 9.5 | 8.2 | 9.6 |

L'adhérence des additifs à la matrice est déterminée de la même façon que dans les exemples 4 à 6.

Le relargage (% en poids) des compositions des exemples 7 à 12 est inférieur à 6, celui des compositions des exemples 13 à 17 est inférieur à 0.3.

**Exemple 18 - 23 : préparation de compositions de polymère hydrophile**

Matières utilisées :

A5 : polyéthylène téréphtalate (référence MTV1160)
A6 : polybutylène téréphtalate
A7 : polypropylène (référence Profax® 6301)

Additif B2

On prépare des granulés comportant le polymère et un des additifs par extrusion en extrudeuse double vis avec alimentation en granulés de chacun des constituants. Les compositions ainsi réalisées sont données dans le

tableau 6. La reprise d'humidité des compositions et l'adhérence des additifs à la matrice sont déterminées sur poudre, de la même façon que dans les exemples 7 à 17. Les résultats sont également présentés dans le tableau 6.

Tableau 6

| Exemples | 18 | 19 | 20 | 21 (comparatif) | 22 (comparatif) | 23 (comparatif) |
|---|---|---|---|---|---|---|
| Polymère (% en poids) | A5-90% | A6-90% | A7-90% | A5-100% | A6-100% | A7-100% |
| Additif (% en poids) | B2-10% | B2-10% | B2-10% | B2-10% - | - | - |
| Absorption d'humidité à 94% (%) | 1.1 | 0.4 | 0.7 | 0.5 | - | 0.4 |
| Relargage (% en poids) | <<3 | ~ 3 | ~ 3 | - | - | - |

## Revendications

1. Polymère thermoplastique comprenant un bloc de polymère thermoplastique et au moins un bloc de polyoxyde d'alkylène, **caractérisé en ce que** :

   a) le bloc de polymère thermoplastique comprend :

      ♦ une chaîne macromoléculaire étoile ou H comprenant au moins un coeur multifonctionnel et au moins une branche ou un segment de polymère thermoplastique relié au coeur, le coeur comprenant au moins trois fonctions réactives identiques
      et/ou
      ♦ une chaîne macromoléculaire linéaire comprenant un coeur difonctionnel et au moins un segment de polymère thermoplastique relié au coeur ; et

   b) le ou les blocs de polyoxyde d'alkylène sont reliés à au moins une partie des extrémités libres du bloc de polymère thermoplastique de la façon suivante :

      ♦ au moins une extrémité libre de la chaîne macromoléculaire étoile ou H, choisie parmi les extrémités de branche ou segment de polymère thermoplastique et les extrémités du coeur multifonctionnel, est reliée à un bloc de polyoxyde d'alkylène
      et/ou
      ♦ au moins une extrémité libre de la chaîne macromoléculaire linéaire, choisie parmi les extrémités de segment de polymère thermoplastique et les extrémités du coeur difonctionnel, est reliée à un bloc de polyoxyde d'alkylène ;
      les deux extrémités libres de la chaîne macromoléculaire linéaire étant reliées à des blocs de polyoxyde d'alkylène lorsque le bloc de polymère thermoplastique comprend des chaînes macromoléculaires uniquement de type linéaire ; et lorsque le bloc de polymère thermoplastique comprend des chaînes macromoléculaires uniquement de type linéaire, alors le polymère thermoplastique dont les deux extrémités libres de la chaîne macromoléculaire linéaire sont reliées à des blocs de polyoxyde d'alkylène est obtenu lorsque l'on fait réagir :

         - d'une part des blocs de polyoxyde d'alkylène possédant une seule fonction terminale réactive B.
         - d'autre part :

            - des chaînes macromoléculaires de polymère thermoplastique possédant au moins des fonctions terminales réactives A.
            et/ou
            - des composés d'au moins deux types :

               ⇒ des composés difonctionnels comprenant des fonctions réactives A,
               ⇒ des monomères comprenant chacun des fonctions réactives A et B et/ou

      un polymère thermoplastique comprenant des fonctions réactives A et B, les fonctions A et B pouvant réagir

entre elles pour fixer les blocs de polyoxyde d'alkylène sur les chaînes macromoléculaires de polymère thermoplastique et/ou les monomères et/ou le polymère thermoplastique;
en chauffant à une température suffisante pour réaliser la réaction entre ces différentes fonctions.

**2.** Polymère thermoplastique selon la revendication 1, **caractérisé en ce que** la chaîne macromoléculaire étoile est un polyamide étoile obtenu par copolymérisation à partir d'un mélange de monomères comprenant :

a) un composé multifonctionnel comprenant au moins trois fonctions réactives identiques choisies parmi la fonction amine et la fonction acide carboxylique
b) des monomères de formules générales (IIa) et/ou (IIb) suivantes :

$$X—R_1—Y \qquad (IIa)$$

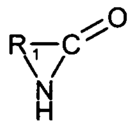

(IIb)

c) le cas échéant des monomères de formule générale (III) suivante :

$$Z\text{-}R_2\text{-}Z \qquad (III)$$

dans lesquelles :

- Z représente une fonction identique à celle des fonctions réactives du composé multifonctionnel
- $R_1$, $R_2$ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire.

**3.** Polymère thermoplastique selon la revendication 1, **caractérisé en ce que** la chaîne macromoléculaire H du bloc de polymère thermoplastique est un polyamide H obtenu par copolymérisation à partir d'un mélange de monomères comprenant:

a) un composé multifonctionnel comprenant au moins trois fonctions réactives identiques choisies parmi la fonction amine et la fonction-acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,

les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

**4.** Polymère thermoplastique selon la revendication 1, **caractérisé en ce que** le bloc de polymère thermoplastique est obtenu par extrusion d'un mélange comprenant un polyamide du type de ceux obtenus par polymérisation des lactames et/ou amino-acides et un composé multifonctionnel comprenant au moins trois fonctions réactives identiques choisies parmi la fonction amine ou la fonction acide carboxylique.

**5.** Polymère thermoplastique selon l'une des revendications 2 à 4, **caractérisé en ce que** le composé multifonctionnel présente une structure arborescente ou dendritique.

**6.** Polymère thermoplastique selon l'une des revendications 2 à 5, **caractérisé en ce que** le composé multifonctionnel est représenté par la formule (IV)

R1-[-A-Z]$_m$ (IV)

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

**7.** Polymère thermoplastique selon la revendication 6 **caractérisé en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

**8.** Polymère thermoplastique selon la revendication 1, **caractérisé en ce que** la chaîne macromoléculaire linéaire du bloc de polymère thermoplastique est un polyamide linéaire obtenu par copolymérisation à partir d'un mélange de monomères comprenant :

a) un composé difonctionnel comprenant deux fonctions réactives identiques choisies parmi la fonction amine et la fonction acide carboxylique
b) des monomères de formules générales (Va) et/ou (Vb) suivantes:

X-R-Y (Va)

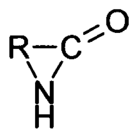

(Vb)

dans lesquelles :

- ♦ R représente un radical hydrocarboné aliphatique, cycloaliphatique ou aromatique, substitué ou non, comprenant de 2 à 36 atomes de carbone, et pouvant comprendre des hétéroatomes
- ♦ Y est une fonction amine primaire quand X est une fonction acide carboxylique
- ♦ Y est une fonction acide carboxylique quand X est une fonction amine primaire.

**9.** Polymère thermoplastique selon la revendication 8, **caractérisé en ce que** R est un radical linéaire divalent pentyle.

**10.** Polymère thermoplastique selon la revendication 8 ou 9, **caractérisé en ce que** le composé difonctionnel est représenté par la formule (VI) :

Z-A-$R_1$-B-Z (VI)

dans laquelle :

- ♦ $R_1$ est un radical hydrocarboné comprenant au moins deux atomes de carbone linéaire ou cyclique, aromatique ou aliphatique, substitué ou non et pouvant comprendre des hétéroatomes,
- ♦ A et B sont des liaisons covalentes ou des radicaux hydrocarbonés aliphatiques comprenant de 1 à 6 atomes de carbone, A et B étant identiques ou différents
- ♦ Z est une fonction choisie parmi la fonction amine et la fonction acide carboxylique.

**11.** Polymère thermoplastique selon l'une des revendications 8 à 10, **caractérisé en ce que** la masse moléculaire moyenne de la chaîne macromoléculaire linéaire est comprise entre 200 et 50000 g/mol

**12.** Polymère thermoplastique selon l'une des revendications précédentes, **caractérisé en ce qu'**il comprend des chaînes macromoléculaires linéaires de polyamide ne contenant pas de coeur multifonctionnel et/ou difonctionnel.

**13.** Polymère thermoplastique selon l'une des revendications précédentes, **caractérisé en ce que** le bloc de polyoxyde d'alkylène est linéaire.

**14.** Polymère thermoplastique selon l'une des revendications précédentes, **caractérisé en ce que** le bloc de polyoxyde d'alkylène est un bloc de polyoxyde d'éthylène.

**15.** Polymère thermoplastique selon l'une des revendications précédentes, **caractérisé en ce que** la masse moléculaire moyenne du bloc de polyoxyde d'alkylène est comprise entre 200 et 2000 g/mol.

**16.** Polymère thermoplastique selon l'une des revendications précédentes, **caractérisé en ce que** toutes les extrémités libres de la chaîne macromoléculaire du bloc de polymère themoplastique sont reliées à un bloc de polyoxyde d'alkylène.

**17.** Procédé de préparation d'un polymère thermoplastique selon l'une des revendications précédentes, **caractérisé en ce que** l'on fait réagir :

- ♦ d'une part des blocs de polyoxyde d'alkylène possédant des fonctions terminales réactives B,
- ♦ d'autre part :

  - des chaînes macromoléculaires de polymère thermoplastique possédant au moins des fonctions terminales réactives A
  et/ou
  - des composés d'au moins deux types :

    ⇒ des composés multifonctionnels et/ou difonctionnels comprenant des fonctions réactives A
    ⇒ des monomères comprenant chacun des fonctions réactives A et B et/ou un polymère thermoplastique comprenant des fonctions réactives A et B les fonctions A et B pouvant réagir entre elles pour fixer les blocs de polyoxyde d'alkylène sur les chaînes macromoléculaires de polymère thermoplastique et/ou les monomères et/ou le polymère thermoplastique;

et on chauffe à une température suffisante pour réaliser la réaction entre ces différentes fonctions.

**18.** Procédé selon la revendication 17, **caractérisé en ce que** les blocs de polyoxyde d'alkylène possèdent une seule fonction terminale réactive B amine.

**19.** Procédé selon l'une des revendications 17 ou 18, **caractérisé en ce que** les fonctions terminales réactives A et B sont choisies parmi les fonctions acides carboxyliques et les fonctions amines.

**20.** Procédé selon l'une des revendications 17 à 19, **caractérisé en ce que** :

- ♦ les fonctions terminales A sont des fonctions acides carboxyliques lorsque les fonctions terminales B sont des fonctions amines
- ♦ les fonctions terminales B sont des fonctions acides carboxyliques lorsque les fonctions terminales A sont des fonctions amines

**21.** Utilisation d'un polymère thermoplastique selon l'une quelconque des revendications 1 à 16 ou obtenu par le procédé selon l'une quelconque des revendications 17 à 20 comme additif dans une composition polymérique

**22.** Composition polymère thermoplastique comprenant au moins:

- ♦ un premier polymère thermoplastique hydrophile selon l'une quelconque des revendications 1 à 16 ou obtenu par le procédé selon l'une quelconque des revendications 17 à 20
- ♦ un second polymère thermoplastique.

**23.** Composition polymère thermoplastique selon la revendication 22, **caractérisée en ce que** le second polymère thermoplastique est un polyamide choisi parmi le PA 6, le PA 11, le PA 12, le PA 6.6, leurs mélanges et leurs copolymères

**24.** Composition polymère thermoplastique selon la revendication 22 ou 23, **caractérisée en ce que** la proportion pondérale du premier polymère thermoplastique dans la composition est comprise entre 4 et 20%.

**25.** Composition polymère thermoplastique selon l'une quelconque des revendications 22 à 24, **caractérisée en ce qu'**elle comprend des charges.

**26.** Composition polymère thermoplastique selon la revendications 25, **caractérisée en ce que** les charges sont des agents matifiants.

**27.** Composition polymère thermoplastique selon la revendication 25, **caractérisée en ce que** les charges sont des pigments colorés, des agents de stabilisation chaleur ou lumière, des agents de protection chaleur, des agents anti-microbiens, des agents anti-salissure ou des agents antistatiques.

**28.** Fils, fibres et filaments obtenus par filage en fondu d'une composition selon l'une des revendications 22 à 27.

**Patentansprüche**

**1.** Thermoplastisches Polymer mit einem Block aus thermoplastischem Polymer und mindestens einem Polyalkylenoxidblock, **dadurch gekennzeichnet, dass**:

a) der Block aus thermoplastischem Polymer Folgendes umfasst:

♦ eine sternförmige makromolekulare Kette oder H mit mindestens einem multifunktionellen Kern und mindestens einer Verzweigung oder einem an den Kern gebundenen Segment aus thermoplastischem Polymer, wobei der Kern mindestens drei identische reaktive Funktionen umfasst,
und/oder
♦ eine lineare makromolekulare Kette mit einem difunktionellen Kern und mindestens einem an den Kern gebundenen Segment aus thermoplastischem Polymer; und

b) der oder die Polyalkylenoxidblöcke auf die folgende Weise an mindestens einen Teil der freien Enden des Blocks aus thermoplastischem Polymer gebunden sind:

♦ mindestens ein freies Ende der sternförmigen makromolekularen Kette oder H, ausgewählt aus den Enden einer Verzweigung oder eines Segments aus thermoplastischem Polymer und den Enden des multifunktionellen Kerns, ist an einen Polyalkylenoxidblock gebunden,
und/oder
♦ mindestens ein freies Ende der linearen makromolekularen Kette, ausgewählt aus den Enden eines Segments aus thermoplastischem Polymer und den Enden des difunktionellen Kerns, ist an einen Polyalkylenoxidblock gebunden;
wobei die zwei freien Enden der linearen makromolekularen Kette an Polyalkylenoxidblöcke gebunden sind, wenn der Block aus thermoplastischem Polymer nur makromolekulare Ketten vom linearen Typ umfasst; und
dann, wenn der Block aus thermoplastischem Polymer nur makromolekulare Ketten vom linearen Typ umfasst, das thermoplastische Polymer, dessen zwei freie Enden der linearen makromolekularen Kette an Polyalkylenoxidblöcke gebunden sind, bei der Umsetzung von:

- einerseits Polyalkylenoxidblöcken mit einer einzigen reaktiven endständigen Funktion B,
- andererseits:

  - makromolekularen Ketten aus thermoplastischem Polymer mit mindestens reaktiven endständigen Funktionen A
  und/oder
  - Verbindungen von mindestens zwei Typen:

    ⇒ difunktionellen Verbindungen, die reaktive Funktionen A umfassen,
    ⇒ Monomeren, die jeweils reaktive Funktionen A und B umfassen, und/oder einem thermoplastischen Polymer, das reaktive Funktionen A und B umfasst,

wobei die Funktionen A und B zur Fixierung der Polyalkylenoxidblöcke an den makromolekularen Ketten aus thermoplastischem Polymer und/oder den Monomeren und/oder dem thermoplastischen Polymer miteinander reagieren können;
unter Erwärmen auf eine zur Durchführung der Reaktion zwischen diesen verschiedenen Funktionen ausreichende Temperatur erhalten wird.

2. Thermoplastisches Polymer nach Anspruch 1, **dadurch gekennzeichnet, dass** es sich bei der sternförmigen makromolekularen Kette um ein durch Copolymerisation einer Monomerenmischung, umfassend:

a) eine multifunktionelle Verbindung mit mindestens drei identischen reaktiven Funktionen, ausgewählt aus der Aminfunktion und der Carbonsäurefunktion,
b) Monomere der folgenden allgemeinen Formeln (IIa) und/oder (IIb):

$$X\text{-}R_1\text{-}Y \qquad \text{(IIa)}$$

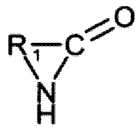

(IIb)

c) gegebenenfalls Monomere der folgenden allgemeinen Formel (III) :

$$Z\text{-}R_2\text{-}Z \qquad \text{(III)}$$

worin:

- Z für eine Funktion steht, die mit den reaktiven Funktionen der multifunktionellen Verbindung identisch ist,
- $R_1$ und $R_2$ für gleiche oder verschiedene gegebenenfalls substituierte aliphatische, cycloaliphatische oder aromatische Kohlenwasserstoffreste, die 2 bis 20 Kohlenstoffatome enthalten und Heteroatome enthalten können, stehen,
- Y für eine primäre Aminfunktion steht, wenn X für eine Carbonsäurefunktion steht, bzw.
- Y für eine Carbonsäurefunktion steht, wenn X für eine primäre Aminfunktion steht,

erhaltenes sternförmiges Polyamid handelt.

3. Thermoplastisches Polymer nach Anspruch 1, **dadurch gekennzeichnet, dass** es sich bei der makromolekularen Kette H des Blocks aus thermoplastischem Polymer um ein durch Copolymerisation einer Monomerenmischung, umfassend:

a) eine multifunktionelle Verbindung mit mindestens drei identischen reaktiven Funktionen, ausgewählt aus der Aminfunktion und der Carbonsäurefunktion,
b) Lactame und/oder Aminosäuren,
c) eine difunktionelle Verbindung, ausgewählt aus Dicarbonsäuren oder Diaminen,
d) eine monofunktionelle Verbindung, bei deren Funktion es sich um eine Aminfunktion oder eine Carbonsäurefunktion handelt,

wobei es sich bei den Funktionen von c) und d) um Amin handelt, wenn es sich bei den Funktionen von a) um Säure handelt, es sich bei den Funktionen von c) und d) um Säure handelt, wenn es sich bei den Funktionen von a) um Amin handelt, das Äquivalentverhältnis zwischen den funktionellen Gruppen von a) und der Summe der funktionellen Gruppen von c) und d) zwischen 1, 5 und 0,66 liegt und das Äquivalentverhältnis zwischen den funktionellen Gruppen von c) und den funktionellen Gruppen von d) zwischen 0,17 und 1,5 liegt, erhaltenes Polyamid H handelt.

4. Thermoplastisches Polymer nach Anspruch 1, **dadurch gekennzeichnet, dass** der Block aus thermoplastischem Polymer durch Extrudieren einer Mischung, die ein Polyamid vom Typ der durch Polymerisation von Lactamen und/oder Aminosäuren und einer multifunktionellen Verbindung mit mindestens drei identischen reaktiven Funktionen, ausgewählt aus der Aminfunktion oder der Carbonsäurefunktion, erhaltenen Polyamide umfasst, erhalten wird.

**5.** Thermoplastisches Polymer nach einem der Ansprüche 2 bis 4, **dadurch gekennzeichnet, dass** die multifunktionelle Verbindung eine baumartige oder dendritische Struktur aufweist.

**6.** Thermoplastisches Polymer nach einem der Ansprüche 2 bis 5, **dadurch gekennzeichnet, dass** die multifunktionelle Verbindung durch die Formel (IV) wiedergegeben wird:

$$R1\text{-}[\text{-}A\text{-}z\ ]_m \qquad (IV)$$

worin:

- $R_1$ für einen aromatischen oder aliphatischen, linearen oder cyclischen Kohlenwasserstoffrest mit mindestens zwei Kohlenstoffatomen, der Heteroatome enthalten kann, steht,
- A für eine kovalente Bindung oder einen aliphatischen Kohlenwasserstoffrest mit 1 bis 6 Kohlenstoffatomen steht,
- Z für einen primären Aminrest oder einen Carbonsäurerest steht,
- m für eine ganze Zahl zwischen 3 und 8 steht.

**7.** Thermoplastisches Polymer nach Anspruch 6, **dadurch gekennzeichnet, dass** die multifunktionelle Verbindung aus 2,2,6,6-Tetra(β-carboxyethyl)cyclohexanon, Trimesinsäure, 2,4,6-Tri(aminocapronsäure)-1,3,5-triazin und 4-Aminoethyl-1,8-octan-diamin ausgewählt ist.

**8.** Thermoplastisches Polymer nach Anspruch 1, **dadurch gekennzeichnet, dass** es sich bei der linearen makromolekularen Kette des Blocks aus thermoplastischem Polymer um ein durch Copolymerisation einer Monomerenmischung, umfassend:

a) eine difunktionelle Verbindung mit zwei identischen reaktiven Funktionen, ausgewählt aus der Aminfunktion und der Carbonsäurefunktion,
b) Monomere der folgenden allgemeinen Formeln (Va) und/oder (Vb):

$$X\text{-}R\text{-}Y \qquad (Va)$$

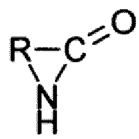

(Vb)

worin:

- ♦ R für einen gegebenenfalls substituierten aliphatischen, cycloaliphatischen oder aromatischen Kohlenwasserstoffrest, der 2 bis 36 Kohlenstoffatome enthält und Heteroatome enthalten kann, steht,
- ♦ Y für eine primäre Aminfunktion steht, wenn X für eine Carbonsäurefunktion steht,
- ♦ Y für eine Carbonsäurefunktion steht, wenn X für eine primäre Aminfunktion steht,

erhaltenes lineares Polyamid handelt.

**9.** Thermoplastisches Polymer nach Anspruch 8, **dadurch gekennzeichnet, dass** R für einen zweiwertigen linearen Pentylrest steht.

**10.** Thermoplastisches Polymer nach Anspruch 8 oder 9, **dadurch gekennzeichnet, dass** die difunktionelle Verbindung durch die Formel (VI) wiedergegeben wird:

$$Z\text{-}A\text{-}R_1\text{-}B\text{-}Z \qquad (VI)$$

worin:

- ♦ $R_1$ für einen gegebenenfalls substituierten aromatischen oder aliphatischen, linearen oder cyclischen Kohlenwasserstoffrest mit mindestens zwei Kohlenstoffatomen, der Heteroatome enthalten kann, steht,

♦ A und B für kovalente Bindungen oder aliphatische Kohlenwasserstoffreste mit 1 bis 6 Kohlenstoffatomen stehen, wobei A und B gleich oder verschieden sind,

♦ Z für eine Funktion steht, die aus der Aminfunktion und der Carbonsäurefunktion ausgewählt ist.

**11.** Thermoplastisches Polymer nach einem der Ansprüche 8 bis 10, **dadurch gekennzeichnet, dass** die mittlere Molmasse der linearen makromolekularen Kette zwischen 200 und 50.000 g/mol liegt.

**12.** Thermoplastisches Polymer nach einem der vorhergehenden Ansprüche, **dadurch gekennzeichnet, dass** es lineare makromolekulare Ketten aus Polyamid ohne multifunktionellen und/oder difunktionellen Kern umfasst.

**13.** Thermoplastisches Polymer nach einem der vorhergehenden Ansprüche, **dadurch gekennzeichnet, dass** der Polyalkylenoxidblock linear ist.

**14.** Thermoplastisches Polymer nach einem der vorhergehenden Ansprüche, **dadurch gekennzeichnet, dass** es sich bei dem Polyalkylenoxidblock um einen Polyethylenoxidblock handelt.

**15.** Thermoplastisches Polymer nach einem der vorhergehenden Ansprüche, **dadurch gekennzeichnet, dass** die mittlere Molmasse des Polyalkyenoxidblocks zwischen 200 und 2000 g/mol liegt.

**16.** Thermoplastisches Polymer nach einem der vorhergehenden Ansprüche, **dadurch gekennzeichnet, dass** alle freien Enden der makromolekularen Kette des Blocks aus thermoplastischem Polymer an einen Polyalkylenoxidblock gebunden sind.

**17.** Verfahren zur Herstellung eines thermoplastischen Polymers nach einem der vorhergehenden Ansprüche, **dadurch gekennzeichnet, dass** man

♦ einerseits Polyalkylenoxidblöcke mit reaktiven endständigen Funktionen B,

♦ andererseits:

- makromolekulare Ketten aus thermoplastischem Polymer mit mindestens reaktiven endständigen Funktionen A

und/oder

- Verbindungen von mindestens zwei Typen:

⇒ multifunktionelle und/oder difunktionelle Verbindungen, die reaktive Funktionen A umfassen,

⇒ Monomere, die jeweils reaktive Funktionen A und B umfassen, und/oder ein thermoplastisches Polymer, das reaktive Funktionen A und B umfasst,

wobei die Funktionen A und B zur Fixierung der Polyalkylenoxidblöcke an den makromolekularen Ketten aus thermoplastischem Polymer und/oder den Monomeren und/oder dem thermoplastischen Polymer miteinander reagieren können;

zur Reaktion bringt und auf eine zur Durchführung der Reaktion zwischen diesen verschiedenen Funktionen ausreichende Temperatur erhitzt.

**18.** Verfahren nach Anspruch 17, **dadurch gekennzeichnet, dass** die Polyalkylenoxidblöcke eine einzige reaktive endständige Aminfunktion B aufweisen.

**19.** Verfahren nach einem der Ansprüche 17 oder 18, **dadurch gekennzeichnet, dass** die reaktiven endständigen Funktionen A und B aus Carbonsäurefunktionen und Aminfunktionen ausgewählt werden.

**20.** Verfahren nach einem der Ansprüche 17 bis 19, **dadurch gekennzeichnet, dass**:

♦ es sich bei den endständigen Funktionen A um Carbonsäurefunktionen handelt, wenn es sich bei den endständigen Funktionen B um Aminfunktionen handelt,

♦ es sich bei den endständigen Funktionen B um Carbonsäurefunktionen handelt, wenn es sich bei den endständigen Funktionen A um Aminfunktionen handelt.

**21.** Verwendung eines thermoplastischen Polymers nach einem der Ansprüche 1 bis 16 oder eines durch das Verfahren nach einem der Ansprüche 17 bis 20 erhaltenen thermoplastischen Polymers als Additiv in einer Polymerzusammensetzung.

**22.** Thermoplastische Polymerzusammensetzung, umfassend mindestens:

♦ ein erstes hydrophiles thermoplastisches Polymer gemäß einem der Ansprüche 1 bis 16 oder ein durch das Verfahren nach einem der Ansprüche 17 bis 20 erhaltenes hydrophiles thermoplastisches Polymer,
♦ ein zweites thermoplastisches Polymer.

**23.** Thermoplastische Polymerzusammensetzung nach Anspruch 22, **dadurch gekennzeichnet, dass** es sich bei dem zweiten thermoplastischen Polymer um ein Polyamid handelt, das aus PA 6, PA 11, PA 12, PA 6.6, Mischungen davon und Copolymeren davon ausgewählt ist.

**24.** Thermoplastische Polymerzusammensetzung nach Anspruch 22 oder 23, **dadurch gekennzeichnet, dass** der Gewichtsanteil des ersten thermoplastischen Polymers in der Zusammensetzung zwischen 4 und 20% liegt.

**25.** Thermoplastische Polymerzusammensetzung nach einem der Ansprüche 22 bis 24, **dadurch gekennzeichnet, dass** sie Füllstoffe umfasst.

**26.** Thermoplastische Polymerzusammensetzung nach Anspruch 25, **dadurch gekennzeichnet, dass** es sich bei den Füllstoffen um Mattierungsmittel handelt.

**27.** Thermoplastische Polymerzusammensetzung nach Anspruch 25, **dadurch gekennzeichnet, dass** es sich bei den Füllstoffen um Farbpigmente, Wärme- oder Lichtstabilisatoren, Wärmeschutzmittel, antimikrobielle Mittel, Antiverschmutzungsmittel oder Antistatika handelt.

**28.** Fäden, Fasern und Filamente, erhalten durch Schmelzspinnen einer Zusammensetzung nach einem der Ansprüche 2 20 bis 27.

**Claims**

**1.** Thermoplastic polymer comprising a thermoplastic polymer block and at least one polyalkylene oxide block, **characterized in that**:

a) the thermoplastic polymer block comprises:

• a star- or H-configured macromolecular chain comprising at least one multifunctional core and at least one thermoplastic polymer branch or segment linked to the core, the core comprising at least three identical reactive functional groups;
and/or
• a linear macromolecular chain, comprising a difunctional core and at least one thermoplastic polymer segment linked to the core;

b) the polyalkylene oxide block or blocks are linked to at least some of the free ends of the thermoplastic polymer block in the following manner:

• at least one free end of the star- or H-configured macromolecular chain, chosen from among the ends of the thermoplastic polymer branch or segment and the ends of the multifunctional core, is linked to a polyalkylene oxide block;
and/or
• at least one free end of the linear macromolecular chain, chosen from among the ends of the thermoplastic polymer segment and the ends of the difunctional core, is linked to a polyalkylene oxide block;

both free ends of the linear macromolecular chain being linked to polyalkylene oxide blocks when the thermoplastic polymer block comprises only linear-type macromolecular chains; and when the thermoplastic polymer block comprises only linear-type macromolecular chains, then the thermoplastic polymer of which both free ends of the macromolecular linear chain are linked to polyalkylene oxide blocks is obtained when the following are reacted:

- on the one hand, polyalkylene oxide blocks possessing a single reactive terminal functional group B,
- on the other hand:
- thermoplastic polymer macromolecular chains possessing at least reactive terminal functional groups A, and/or
- compounds of at least two types:

⇒ difunctional compounds comprising reactive functional groups A,
⇒ monomers each comprising reactive functional groups A and B and/or a thermoplastic polymer comprising reactive functional groups A and B,

the functional groups A and B possibly reacting together to fix the polyalkylene oxide blocks to the thermoplastic polymer macromolecular chains and/or the monomers and/or the thermoplastic polymer;
the above being heated to a temperature high enough to carry out the reaction between these various functional groups.

2. Thermoplastic polymer according to Claim 1, **characterized in that** the star-configured macromolecular chain is a star-configured polyamide obtained by copolymerization from a monomer mixture comprising:

a) a multifunctional compound comprising at least three identical reactive functional groups chosen from the amine functional group and the carboxylic acid functional group;
b) monomers of formulae (IIa) and/or (IIb) below:

$$X—R_1—Y \qquad (IIa)$$

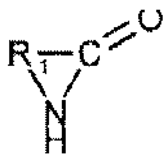 (IIb)

c) where appropriate, monomers of formula (III) below:

$$Z\text{-}R_2\text{-}Z \qquad (III)$$

in which:

• Z represents a functional group identical to that of the reactive functional groups of the multifunctional compound;
• $R_1$, $R_2$ represent substituted or unsubstituted, aliphatic, cycloaliphatic or aromatic radicals, which may be identical or different, containing from 2 to 20 carbon atoms and possibly including heteroatoms;
• Y is a primary amine functional group when X represents a carboxylic acid functional group; or
• Y is a carboxylic acid functional group when X represents a primary amine functional group.

3. Thermoplastic polymer according to Claim 1, **characterized in that** the H-configured macromolecular chain of the thermoplastic polymer block is an H-configured polyamide obtained by copolymerization from a monomer mixture comprising:

a) a multifunctional compound comprising at least three identical reactive functional groups chosen from the amine functional group and the carboxylic acid functional group;
b) lactams and/or amino acids;
c) a difunctional compound chosen from dicarboxylic acids or diamines;
d) a monofunctional compound, the functional group of which is either an amine functional group or a carboxylic acid functional group;

the functional groups of c) and d) being amine when the functional groups of a) are acid, the functional groups of

c) and d) being acid when the functional groups of a) are amine, the ratio in equivalents of the functional groups of a) to the sum of the functional groups of c) and d) being between 1.5 and 0.66 and the ratio in equivalents of the functional groups of c) to the functional groups of d) being between 0.17 and 1.5.

4. Thermoplastic polymer according to Claim 1, **characterized in that** the thermoplastic polymer block is obtained by extruding a blend comprising a polyamide, of the type obtained by polymerization of lactams and/or amino acids, and of a multifunctional compound comprising at least three identical reactive functional groups chosen from the amine or carboxylic acid functional group.

5. Thermoplastic polymer according to one of Claims 2 to 4, **characterized in that** the multifunctional compound has a tree or dendritic structure.

6. Thermoplastic polymer according to one of Claims 2 to 5, **characterized in that** the multi-functional compound is chosen from compounds represented by the formula (IV):

$$R1\text{-}[\text{-}A\text{-}z\ ]_m \qquad (IV)$$

in which:

- $R_1$ is an aromatic or aliphatic, linear or cyclic, hydrocarbon radical containing at least two carbon atoms and possibly including heteroatoms;
- A is a covalent bond or an aliphatic hydrocarbon radical containing from 1 to 6 carbon atoms;
- Z represents a primary amine radical or a carboxylic acid radical; and
- m is an integer between 3 and 8.

7. Thermoplastic polymer according to Claim 6, **characterized in that** the multifunctional compound is chosen from 2,2,6,6-tetra(β-carboxyethyl)-cyclohexanone, trimesic acid, 2,4,6-tri(aminocaproic acid)-1,3,5-triazine and 4-aminoethyl-1,8-octane diamine.

8. Thermoplastic polymer according to Claim 1, **characterized in that** the linear macromolecular chain of the thermoplastic polymer block is a linear polyamide obtained by copolymerization using a monomer mixture comprising:

a) a difunctional compound comprising two identical reactive functional groups chosen from the amine functional group and the carboxylic acid functional group;
b) monomers of formulae (Va) and/or (Vb) below:

$$X\text{-}R\text{-}Y \qquad (Va)$$

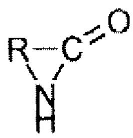
(Vb)

in which:

* R represents a substituted or unsubstituted, aliphatic, cycloaliphatic or aromatic hydrocarbon radical containing from 2 to 36 carbon atoms and possibly including heteroatoms;
* Y is a primary amine functional group when X is a carboxylic acid functional group;
* Y is a carboxylic acid functional group when X is a primary amine functional group.

9. Thermoplastic polymer according to Claim 8, **characterized in that** R is a pentyl divalent linear radical.

10. Thermoplastic polymer according to Claim 8 or 9, **characterized in that** the difunctional compound is represented by formula (VI):

$$Z\text{-}A\text{-}R_1\text{-}B\text{-}Z \qquad (VI)$$

in which:

* $R_1$ is a hydrocarbon radical comprising at least two substituted or unsubstituted, aromatic or aliphatic, linear or cyclic carbon atoms, and which may include heteroatoms;
* A and B are covalent bonds or aliphatic hydrocarbon radicals containing from 1 to 6 carbon atoms, A and B being identical or different; and
* Z is a functional group chosen from the amine functional group and the carboxylic acid functional group.

**11.** Thermoplastic polymer according to one of Claims 8 to 10, **characterized in that** the average molecular mass of the linear macromolecular chain is between 200 and 50 000 g/mol.

**12.** Thermoplastic polymer according to one of the preceding claims, **characterized in that** it comprises linear polyamide macromolecular chains not containing multifunctional and/or difunctional cores.

**13.** Thermoplastic polymer according to one of the preceding claims, **characterized in that** the polyalkylene oxide block is linear.

**14.** Thermoplastic polymer according to one of the preceding claims, **characterized in that** the polyalkylene oxide block is a polyethylene oxide block.

**15.** Thermoplastic polymer according to one of the preceding claims, **characterized in that** the average molecular mass of the polyalkylene oxide block is between 200 and 2000 g/mol.

**16.** Thermoplastic polymer according to one of the preceding claims, **characterized in that** all the free ends of the macromolecular chain of the thermoplastic polymer block are linked to a polyalkylene oxide block.

**17.** Process for preparing a thermoplastic polymer according to one of the preceding claims, **characterized in that** the following are made to react:

* on the one hand, polyalkylene oxide blocks possessing reactive terminal functional groups B;
* on the other hand:

- thermoplastic polymer macromolecular chains possessing at least reactive terminal functional groups A and/or
- compounds of at least two types:

⇒ multifunctional and/or difunctional compounds comprising reactive functional groups A
⇒ monomers each comprising reactive functional groups A and B and/or a thermoplastic polymer comprising reactive functional groups A and B,

the functional groups A and B possibly reacting together to fix the polyalkylene oxide blocks to the thermoplastic polymer macromolecular chains and/or the monomers and/or the thermoplastic polymer;
and the above is heated to a temperature high enough to carry out the reaction between these various functional groups.

**18.** Process according to Claim 17, **characterized in that** the polyalkylene oxide blocks possess a single reactive terminal amine functional group B.

**19.** Process according to either of Claims 17 and 18, **characterized in that** the reactive terminal functional groups A and B are chosen from carboxylic acid functional groups and amine functional groups.

**20.** Process according to one of Claims 17 to 19, **characterized in that**:

* the terminal functional groups A are carboxylic acid functional groups when the terminal functional groups B are amine functional groups;
* the terminal functional groups B are carboxylic acid functional groups when the terminal functional groups A are amine functional groups.

**21.** Use of a thermoplastic polymer according to any one of Claims 1 to 16 or obtained by the process according to any one of Claims 17 to 20 as additive in a polymeric composition.

**22.** Thermoplastic polymer composition comprising at least:

* a first hydrophilic thermoplastic polymer according to any one of Claims 1 to 16 or obtained by the process according to any one of Claims 17 to 20;
* a second thermoplastic polymer.

**23.** Thermoplastic polymer composition according to Claim 22, **characterized in that** the second thermoplastic polymer is a polyamide chosen from PA-6, PA-11, PA-12, PA-6,6, blends thereof and copolymers thereof.

**24.** Thermoplastic polymer composition according to Claim 22 or 23, **characterized in that** the proportion by weight of the first thermoplastic polymer in the composition is between 4 and 20%.

**25.** Thermoplastic polymer composition according to any one of Claims 22 to 24, **characterized in that** it includes fillers.

**26.** Thermoplastic polymer composition according to Claim 25, **characterized in that** the fillers are delustrants.

**27.** Thermoplastic polymer composition according to Claim 25, **characterized in that** the fillers are coloured pigments, heat-stabilizers or light-stabilizers, heat protection agents, antimicrobial agents, anti-soiling agents or antistatics.

**28.** Yarns, fibres and filaments obtained by melt spinning a composition according to one of Claims 22 to 27.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4331786 A
- US 4727133 A
- FR 2743077
- FR 2779730
- US 5959069 A
- EP 0632703 A
- EP 0682057 A
- EP 0832149 A
- EP 0682070 A
- EP 0672703 A
- US 5346984 A
- WO 9635739 A
- EP 672703 A


### Littérature non-brevet citée dans la description


- hydrophilic nylon for improved apparel comfort. *Textile Research Journal,* Juin 1985, 325-333